# EUROPEAN PATENT SPECIFICATION

(11) **EP 2 989 457 B1**
(45) Date of publication and mention of the grant of the patent: **04.10.2023**
(21) Application number: 14788653.5
(22) Date of filing: 23.04.2014
(51) Int. Cl.: G01N 21/85, G01N 15/14, G01N 15/10

(54) **METHODS AND SYSTEMS FOR THE COLLECTION OF LIGHT USING TOTAL INTERNAL REFLECTANCE**
VERFAHREN UND SYSTEME ZUR LICHTERFASSUNG UNTER VERWENDUNG EINER INTERNEN TOTALREFLEXION
PROCÉDÉS ET SYSTÈMES DE CAPTAGE DE LUMIÈRE À L'AIDE D'UNE RÉFLECTANCE INTERNE TOTALE

(30) Priority: 26.04.2013 US 201361816288 P
(43) Date of publication of application: 02.03.2016
(73) Proprietor: Becton, Dickinson and Company, Franklin Lakes, NJ 07417-1880 (US)
(72) Inventor: VAN DER ENGH, Gerrit J, Concrete, Washington 98115 (US); PETERSEN, Timothy, Wayne, Seattle, WA 98177 (US)
(74) Representative: Duxbury, Stephen
(86) International application number: PCT/US2014/035194
(87) International publication number: WO 2014/176366

(56) References cited:
- WO-A1-2008/128213
- WO-A1-2012/100940
- US-A- 4 226 532
- US-A- 4 600 302
- US-A- 5 671 046
- US-A1- 2004 239 924
- US-A1- 2010 328 664
- US-A1- 2012 078 531
- US-B1- 6 813 017
- LEE ET AL.: 'Micro flow cytometers with buried SU -8/SOG optical waveguides' SENSORS AND ACTUATORS A: PHYSICAL vol. 103, no. 1, 2003, pages 165 - 170, XP055288906
- HUH ET AL.: 'Microfluidic for flow cytometric analysis of cells and particles' PHYSIOLOGICAL MEASUREMENT vol. 26, no. 3, 2005, pages R73 - R98, XP020092189

## Description

### CROSS-REFERENCE TO RELATED APPLICATIONS

This application is related to United States Provisional Patent Application Serial No. 61/816,288, filed April 26, 2013.

### INTRODUCTION

Flow cytometry is a technique used to characterize and/or sort biological material based on properties such as cell surface markers, DNA, or other cellular content. The technique may be used to record distributions and/or sort the biological material. The biological materials of interest are typically present in an aqueous-based solution, such as in sheath-flow detection in electrophoresis experiments and may include detectable labels such as fluorescent dyes. In flow cytometry, the experimenter shines one or more beams of light at the biological material in the aqueous channel and observes light scattered and emitted from the sample. Variations in the materials, such as morphologies or fluorescent label, may cause variations the observed light and these variations allow the desired characterization and categorization. To quantify these variations, the light must be collected. It is desirable to collect as much of the light as possible in order to maximize the speed and sensitivity of the procedure.

In previously used flow cytometers, the right angle scattered light has been viewed perpendicularly to the liquid flow, typically using a high numerical aperture (NA) microscope objective lens or fiber optic. Highest quality microscope objectives have a "numerical aperture" of 0.6, which provides a subtended polar angle of 2β=37°(0.64 radians). Some of the difficulties associated with this approach include the very limited depth of field of high NA lenses, and the necessity to align precisely the exact focal point of the lens with the irradiated region of the flow channel. Other methods include the collection of light from within the flow channel. These methods may disrupt sample flow and/or contaminate a sample. Methods and systems that provide improved collection of light from a flow channel and that maximize light collection while minimizing the disruption of the flow channel are of interest.

In accordance with its abstract, US5671046A, states ' Device and method are disclosed for optically detecting particles in a free (i.e., unenclosed) stream of liquid. The free liquid stream is produced by ejecting liquid under pressure from a nozzle so that the stream has a smooth round surface. A laser beam intersects the free liquid stream and light scattered by particles in the free liquid stream is collected and processed to provide an output indicative of size and/or number of particles causing the light to be scattered. The free liquid stream is preferably directed vertically downward, and the laser beam and light collector are angularly positioned with respect to the free liquid stream and one another with the light collector collecting scattered light at the intersection of the light beam and the free liquid stream. Embodiments are also disclosed wherein scattered light is collected at a collecting position spaced along the free liquid stream from an illuminating position where the laser beam intersects the free liquid stream with the scattered light traveling along the liquid free stream between the illuminating and collecting positions.'

In accordance with its abstract, US4226532A, states ' According to the invention, the device for granulometric analysis of particles contained in fluids comprises a feeding channel and a receiving channel intended for passage of a fluid under investigation. The two channels communicate with each other through a nozzle. The ratio between the diameters of the nozzle and the receiving channel is in the range of 1/4 to 1/7. The receiving channel is provided with transparent windows for passage of a light flux emitted by a lighting means through the fluid in that channel. The device further includes a light-sensitive means to receive light reflected from particles contained in the fluid.'

### SUMMARY

The present disclosure includes a flow cell nozzle configured to propagate a flow stream comprising a sample wherein the flow cell nozzle comprises: a nozzle chamber having a proximal end and a distal end; and a nozzle orifice positioned at the distal end of the nozzle chamber,wherein the nozzle chamber comprises walls comprising a reflective coating that are angled from 120º to 160º relative to the longitudinal axis of the flow stream, when the flow stream is emanating from the nozzle orifice and reflect light emitted by the sample that is propagated upstream by total internal relectance through the flow stream, when the flow stream is emanating from the nozzle orifice to the proximal end of the nozzle chamber.

The nozzle chamber preferably comprises a proximal cylindrical portion.

The width of the walls of the flow cell at the nozzle orifice is preferably a quarter of the width of the flow stream or less.

The nozzle chamber can further comprise an optical adjustment component

The present disclosure also includes a system for detecting light propagated in a flow stream by total internal reflectance, the system comprising:
a light source configured to irradiate a sample in the flow stream in an interrogation field; a flow cell nozzle as referred to above, and a detector for measuring one or more wavelengths of light propagated by the sample at the proximal end of the nozzle chamber.

The light source is preferably a laser.

The flow cell nozzle is preferably positioned orthogonal to the light source.

The disclosure also includes a method for detecting light propagated in a flow stream by total internal reflectance, the method comprising:
irradiating a sample in the a flow stream in an interrogation field with a light source;
propagating the flow stream with a flow cell nozzle as described above,
detecting light emitted by the sample in the flow stream propagated upstream through the flow stream by total internal reflectance at a proximal end of the nozzle chamber, and measuring the detected light at one or more wavelengths.

The flow stream is preferably irradiated in an interrogation field that is orthogonal to and positioned 1 mm or greater downstream from the flow cell nozzle orifice.

The sample can emit fluorescence heterogeneously.

The sample is preferably a gamete.

### BRIEF DESCRIPTION OF THE FIGURES

The invention may be best understood from the following detailed description when read in conjunction with the accompanying drawings. Included in the drawings are the following figures:
**FIG. 1A** depicts an illustration from a top view of a flow cytometer flow cell according to certain embodiments.
**FIG. 1B** depicts an illustration from a side view of a flow cytometer flow cell according to certain embodiments.
**FIG. 2A** depicts the positioning of a detector with respect to the flow cell nozzle according to certain embodiments.
**FIG. 2B** depicts the positioning of a detector with the flow cell nozzle according to certain embodiments.

### DETAILED DESCRIPTION

Before the present invention is described in greater detail, it is to be understood that this invention is not limited to particular embodiments described, as such may vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the invention. The upper and lower limits of these smaller ranges may independently be included in the smaller ranges and are also encompassed within the invention, subject to any specifically excluded limit in the stated range. Where the stated range includes one or both of the limits, ranges excluding either or both of those included limits are also included in the invention.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, representative illustrative methods and materials are now described.

The citation of any publication is for its disclosure prior to the filing date and should not be construed as an admission that the present invention is not entitled to antedate such publication by virtue of prior invention. Further, the dates of publication provided may be different from the actual publication dates which may need to be independently confirmed.

As summarized above, the present disclosure provides a flow cell configured to propagate upstream light emitted by a sample in a flow stream by total internal reflectance. In further describing embodiments of the disclosure, flow cells configured for propagating light emitted by a sample in a flow stream by total internal reflectance are first described in greater detail. Next, systems for measuring light emitted by a sample in a flow stream are described. Methods for assaying a sample are also provided.

### FLOW CELL NOZZLES FOR PROPAGATING LIGHT EMITTED BY A SAMPLE IN A FLOW STREAM

As summarized above, aspects of the present disclosure include flow cells configured to propagate light emitted by a sample in a flow stream upstream by total internal reflectance. The term "propagate" is used herein in its conventional sense to refer to the travel of light through the fluid medium of the flow stream where the path of propagated light is a function of the refraction, reflection, diffraction and interference by the fluid medium. As described in greater detail below, light emitted by a sample in the flow stream is propagated upstream by total internal reflectance. By "upstream" is meant that the emitted light is propagated and collected in a direction which is opposite to the direction of fluid flow by the flow stream. In other words, where the flow cell nozzle is positioned to generate a flow stream which traverses along the positive Y direction along the Y axis in an X-Y plane, flow cell nozzles of embodiments of the invention are configured to propagate light in the negative Y direction. Likewise, where the flow cell nozzle is positioned to generate a flow stream which traverses along the positive X direction along the X axis in an X-Y plane, flow cell nozzles are configured to propagate light the negative X direction.

The phrase "total internal reflectance" is used herein in its conventional sense to refer to the propagation of electromagnetic waves within the boundaries of a fluid medium such that when a propagating wave strikes the medium boundary at an angle larger than the critical angle with respect to the normal to the surface, the electromagnetic wave is internally reflected. In particular, where the refractive index is lower on the other side of the fluid medium boundary and the incident angle is greater than the critical angle, the propagating light wave does not pass through the boundary and is internally reflected. Light emitted by- a sample in a flow stream emits light in all directions in a fluid medium. Not all light signals may be observed from outside the flow channel. A significant fraction of the light remains within the cylindrical column of the flow stream such that the flow stream acts as a wave guide. Light rays that approach the fluid medium/air interface with an angle exceeding a critical angle (i.e., angle of total internal reflection (TIR)) are reflected back into the medium. For example, the TIR angle of water to air interface is arc sin (1/1.33) =48.7°. Consequently, two cones of light along the axis of the flow channel, one above and one below the light-emitting particle, are trapped inside the flow cytometer flow stream. For an isotropically fluorescing particle, the trapped light inside each of the cones represents 2pi(1-cos(90-48.7))/4pi or 0.1244 of the total fluorescence emission.

In embodiments of the present disclosure, flow cell nozzles are configured to propagate light emitted by a sample in the flow stream in an upstream direction by total internal reflection. In other words, the subject flow cell nozzles are configured to direct light propagated within the flow stream back into the flow cell nozzle through the nozzle orifice and light measured by the detector is the light which is internally reflected within the flow stream. In embodiments, the subject flow cell nozzles are configured to propagate upstream 5% or more of the light emitted by the sample in the flow stream through the nozzle orifice by total internal reflectance, such as 10% or more, such as 15% or more, such as by 25% or more, such as by 35% or more, such as by 50% or more, such as by 65% or more, such as by 75% or more, such as by 85% or more, such as by 95% or more, such as by 99% or more and including propagating upstream 99.% or more of the light emitted by the sample in the flow stream through the nozzle orifice by total internal reflection. For example, flow cell nozzles of interest may be configured to propagate upstream from 5% to 95% of the light emitted by the sample in the flow stream, such as from 10% to 90%, such as from 15% to 85%, such as from 20% and 80%, such as from 25% and 75% and including from 30% to 70% of the light emitted by the sample.

In embodiments of the present disclosure, the flow cell nozzle includes a nozzle chamber having a proximal end where light propagated upstream is collected and a distal end having a nozzle orifice in fluid communication with the flow stream. In some instances, the flow cell nozzle includes a proximal cylindrical portion defining a longitudinal axis and a distal frustoconical portion which terminates in a flat surface having the nozzle orifice that is transverse to the longitudinal axis. The length of the proximal cylindrical portion (as measured along the longitudinal axis) may vary ranging from 1 mm to 15 mm, such as from 1.5 mm to 12.5 mm, such as from 2 mm to 10 mm, such as from 3 mm to 9 mm and including from 4 mm to 8 mm. The length of the distal frustoconical portion (as measured along the longitudinal axis) may also vary, ranging from 1 mm to 10 mm, such as from 2 mm to 9 mm, such as from 3 mm to 8 mm and including from 4 mm to 7 mm. The diameter of the of the flow cell nozzle chamber may vary, in some embodiments, ranging from 1 mm to 10 mm, such as from 2 mm to 9 mm, such as from 3 mm to 8 mm and including from 4 mm to 7 mm.

In certain instances, the nozzle chamber does not include a cylindrical portion and the entire flow cell nozzle chamber is frustoconically shaped. In these embodiments, the length of the frustoconical nozzle chamber (as measured along the longitudinal axis transverse to the nozzle orifice), may range from 1 mm to 15 mm, such as from 1.5 mm to 12.5 mm, such as from 2 mm to 10 mm, such as from 3 mm to 9 mm and including from 4 mm to 8 mm. The diameter of the proximal portion of the frustoconical nozzle chamber may range from 1 mm to 10 mm, such as from 2 mm to 9 mm, such as from 3 mm to 8 mm and including from 4 mm to 7 mm.

Depending on the characteristics of the flow stream and the protocol for detecting light (described below), the angle of the frustoconical walls of the flow nozzle relative to the longitudinal axis of the flow stream may vary, in certain embodiments, ranging from 120° to 160° such as at an angle which ranges from 125° and 155°, such as from 130° and 150° and including an angle which ranges from 135° and 145°. In some embodiments, the frustoconical walls of the nozzle chamber form a 140° angle relative to the longitudinal axis of the flow stream. In other embodiments, the walls of the nozzle chamber form a 130° angle relative to the longitudinal axis of the flow stream. In certain embodiments, the walls of the nozzle chamber form a 135° angle relative to the longitudinal axis of the flow stream.

In some embodiments, the walls of the nozzle chamber are reflective. The term "reflective" is used herein in its conventional sense to refer to the capability of the nozzle chamber walls to change the direction of an electromagnetic wave (e.g., by specular reflectance). All or part of the walls may be reflective. For example, 10% or more of the nozzle chamber walls may be reflective, such as 25% or more, such as 50% or more, such as 75% or more, such as 90% or more and including 95% or more of the walls of the nozzle chamber may be reflective. In certain embodiments, all of the walls of the nozzle chamber are reflective.

Depending on the reflective coating associated with (e.g., applied to) the nozzle chamber walls (as described below), the nozzle chamber walls may be reflective to a range of wavelengths, as desired, such as from 200 nm to 1500 nm, such as from 250 nm to 1250 nm, such as from 300 nm to 1000 nm, such as from 350 nm to 900 nm and including from 400 nm to 800 nm. In one example, the walls of the flow cell nozzle chamber are reflective to ultraviolet, visible light and near-infrared light. In another example, the walls of the flow cell nozzle chamber are reflective to ultraviolet and visible light. In yet another example, the walls of flow cell nozzle chamber are reflective to visible light. In yet another example, the walls of the flow cell nozzle chamber are reflective to ultraviolet light. In still another example, the walls of the flow cell nozzle chamber are reflective to infrared light.

Depending on the desired reflectivity of the nozzle chamber walls, the optical reflector coating applied to the nozzle chamber walls may vary. In some embodiments, the nozzle chamber walls include one or more layers of a high-reflector coating, such as two or more layers, such as three or more layers, such as four or more layers and including five or more layers of the high-reflector coating. The high reflector coating may be thin layer metallic coating, such as but not limited to: gold, silver, aluminum, chromium, nickel, platinum, Inconel and any combinations thereof. Depending on the reflectivity spectrum desired, the thickness of the high-reflector coating may range from 100 nm to 900 nm, such as from 150 nm to 850 nm, such as from 200 nm to 800 nm, such as from 250 nm to 750 nm, such as from 300 nm to 700 nm and including a thickness ranging from 350 nm to 650 nm. Where the nozzle chamber walls include more than one layer of high reflector coating, the thickness of each layer may vary, such as a thickness of 50 nm or more, such as 100 nm or more, such as 150 nm or more, such as 250 nm or more, such as 300 nm or more, such as 500 nm or more, such as 600 nm or more and including a thickness of 750 nm or more.

The amount of light specularly reflected by the nozzle chamber walls may vary, depending on the angle of nozzle chamber walls, the type of reflector coating and thickness of the reflector coating. In some instances, the nozzle chamber walls have a reflectivity of 5% or more, such as 10% or more, such as 15% or more, such as 25% or more, such as 35% or more, such as 50% or more, such as 65% or more, such as 75% or more, such as 85% or more, such as 90% or more, such as 95% or more, such as 97% or more and including a reflectivity of 99%. In certain instances, the nozzle chamber walls have a reflectivity of 100%.

Where the walls of the nozzle chamber are reflective, the nozzle chamber walls may be angled to direct light from the nozzle orifice toward the proximal end of the nozzle chamber. In these embodiments, the walls of the nozzle chamber may be configured to optimize the collection of light propagated upstream through the nozzle orifice by total internal reflectance. By "optimize" is meant that the configuration of the nozzle chamber walls increases the amount of light directed toward the proximal end of the nozzle chamber, such as by 5% or more as compared to nozzle chamber walls which are not angled to reflect light to the proximal end of the nozzle chamber, such as 10% or more, such as 15% or more, such as 25% or more, such as 50% or more, such as 75% or more, such as 90% or more and including being configured to increase the amount of light directed toward the proximal end of the nozzle chamber by 95% or more as compared to nozzle chamber walls which are not angled to direct light to the proximal end of the nozzle chamber. In certain embodiments, the walls form an angle ranging from 120° to 160° relative to the longitudinal axis of the flow stream emanating from the nozzle orifice, such as an angle ranging from 125° and 155°, such as from 130° and 150° and including an angle ranging from 135° and 145°. In some embodiments, the walls of the nozzle chamber form a 140° angle relative to the longitudinal axis of the flow stream. In other embodiments, the walls of the nozzle chamber form a 130° angle relative to the longitudinal axis of the flow stream. In certain embodiments, the walls of the nozzle chamber form a 135° angle relative to the longitudinal axis of the flow stream.

Depending on the desired characteristics of the flow stream, the flow cell nozzle orifice may be any suitable shape where cross-sectional shapes of interest include, but are not limited to: rectilinear cross sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. In certain embodiments, flow cell nozzle of interest has a circular orifice. The size of the nozzle orifice may vary, in some embodiments ranging from 1 µm to 20000 µm, such as from 2 µm to 17500 µm, such as from 5 µm to 15000 µm, such as from 10 µm to 12500 µm, such as from 15 µm to 10000 µm, such as from 25 µm to 7500 µm, such as from 50 µm to 5000 µm, such as from 75 µm to 1000 µm, such as from 100 µm to 750 µm and including from 150 µm to 500 µm. In certain embodiments, the nozzle orifice is 100 µm. The wall thickness of the flow cell nozzle at the orifice may also vary, ranging from 0.001 mm to 25 mm, such as from 0.005 mm to 22.5 mm, such as from 0.01 mm to 20 mm, such as from 0.05 mm to 17.5 mm, such as from 0.1 mm to 15 mm, such as from 0.25 mm to 12.5 mm, such as from 0.5 mm to 10 mm, such as from 0.75 mm to 7.5 mm and including from 1 mm to 5 mm. In certain embodiments, the wall thickness at the nozzle orifice is not greater than 5 mm, such as not greater than 4 mm, such as not greater than 2 mm, such as not greater than 1 mm, such as not greater than 0.5 mm, such as not greater than 0.25 mm and including 0.1 mm. For example, the wall thickness at the nozzle orifice is, in certain instances, not greater than 0.25 mm. In some embodiments, the wall thickness at the nozzle orifice is one-half (1/2) the width of the nozzle orifice or less, such as one-third (1/3) the width of the nozzle orifice or less, such as one-quarter (1/4) the width of the nozzle orifice or less, such as one-fifth (1/5) the width of the nozzle orifice and including one-sixth (1/6) the width of the nozzle orifice or less. For example, where the nozzle orifice is 2 mm wide, the wall thickness of the flow cell at the nozzle orifice may be 1 mm or less, such as 0.75 mm or less, such 0.5 mm or less and including 0.25 mm or less. Where the nozzle orifice is 1 mm wide, the wall thickness of the flow cell at the nozzle orifice may be 0.5 mm or less, such as 0.25 mm or less and including 0.1275 mm or less.

In some embodiments, the flow cell nozzle includes a sample injection port configured to provide a sample to the flow cell nozzle. In embodiments, the sample injection system is configured to provide suitable flow of sample to the flow cell nozzle chamber. Depending on the desired characteristics of the flow stream, the rate of sample conveyed to the flow cell nozzle chamber by the sample injection port may be 1 µL/sec or more, such as 2 µL/sec or more, such as 3 µL/sec or more, such as 5 µL/sec or more, such as 10 µL/sec or more, such as 15 µL/sec or more, such as 25 µL/sec or more, such as 50 µL/sec or more and including 100 µL/sec or more.

The sample injection port may be an orifice positioned in a wall of the nozzle chamber or may be a conduit positioned at the proximal end of the nozzle chamber. Where the sample injection port is an orifice positioned in a wall of the nozzle chamber, the sample injection port orifice may be any suitable shape where cross-sectional shapes of interest include, but are not limited to: rectilinear cross sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion. In certain embodiments, the sample injection port has a circular orifice. The size of the sample injection port orifice may vary depending on shape, in certain instances, having an opening ranging from 0.5 mm to 2.5 mm, such as from 0.75 mm to 2.25 mm, such as from 1 mm to 2 mm and including from 1.25 mm to 1.75 mm, for example 1.5 mm.

In certain instances, the sample injection port is a conduit positioned at a proximal end of the flow cell nozzle chamber. For example, the sample injection port may be a conduit positioned to have the orifice of the sample injection port in line with the flow cell nozzle orifice. Where the sample injection port is a conduit positioned in line with the flow cell nozzle orifice, the cross-sectional shape of the sample injection tube may be any suitable shape where cross-sectional shapes of interest include, but are not limited to: rectilinear cross sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The orifice of the conduit may vary depending on shape, in certain instances, having an opening ranging from 0.5 mm to 2.5 mm, such as from 0.75 mm to 2.25 mm, such as from 1 mm to 2 mm and including from 1.25 mm to 1.75 mm, for example 1.5 mm. The shape of the tip of the sample injection port may be the same or different from the cross-section shape of the sample injection tube. For example, the orifice of the sample injection port may include a beveled tip having an bevel angle ranging from 1° to 10°, such as from 2° to 9°, such as from 3° to 8°, such as from 4° to 7° and including a bevel angle of 5°.

In some embodiments, the flow cell nozzle also includes a sheath fluid injection port configured to provide a sheath fluid to the flow cell nozzle. In embodiments, the sheath fluid injection system is configured to provide a flow of sheath fluid to the flow cell nozzle chamber, for example in conjunction with the sample to produce a laminated flow stream of sheath fluid surrounding the sample flow stream. Depending on the desired characteristics of the flow stream, the rate of sheath fluid conveyed to the flow cell nozzle chamber by the may be 25µL/sec or more, such as 50 µL/sec or more, such as 75 µL/sec or more, such as 100 µL/sec or more, such as 250 µL/sec or more, such as 500 µL/sec or more, such as 750 µL/sec or more, such as 1000 µL/sec or more and including 2500 µL/sec or more.

In some embodiments, the sheath fluid injection port is an orifice positioned in a wall of the nozzle chamber. The sheath fluid injection port orifice may be any suitable shape where cross-sectional shapes of interest include, but are not limited to: rectilinear cross sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sample injection port orifice may vary depending on shape, in certain instances, having an opening ranging from 0.5 mm to 2.5 mm, such as from 0.75 mm to 2.25 mm, such as from 1 mm to 2 mm and including from 1.25 mm to 1.75 mm, for example 1.5 mm.

In some instances, the flow cell nozzle includes one or more optical adjustment components. By "optical adjustment" is meant that emitted light propagated upstream from the flow stream through the nozzle orifice is changed as desired before being conveyed to a detector (as discussed in greater detail below) for measurement. For example, the optical adjustment may be to increase the dimensions of the collected beam of light, to focus the collected beam of light onto the surface of a detector or to collimate the beam of light. In some instances, optical adjustment is a magnification protocol so as to increase the beam spot produced by the light beam propagated through the nozzle orifice by total internal reflectance within the flow stream, such as increasing beam spot by 5% or greater, such as by 10% or greater, such as by 25% or greater, such as by 50% or greater and including increasing the dimensions of the beam spot by 75% or greater. In other embodiments, optical adjustment includes focusing the collected beam of light so as to reduce the dimensions of the beam spot, such as by % or greater, such as by 10% or greater, such as by 25% or greater, such as by 50% or greater and including reducing the dimensions of the beam spot by 75% or greater.

In certain embodiments, optical adjustment includes collimating the light directed toward the proximal end of the flow cell nozzle. The term "collimate" is used in its conventional sense to refer to the optically adjusting the collinearity of light propagation or reducing divergence by the light of from a common axis of propagation. In some instances, collimating includes narrowing the spatial cross section of a light beam.

Optical adjustment components may be any convenient device or structure which provides the desired change in the collected light and may include, but is not limited to, lenses, mirrors, pinholes, slits, gratings, light refractors, and any combinations thereof. Flow cell nozzles may include one or more optical adjustment components as needed, such as two or more, such as three or more, such as four or more and including five or more optical adjustment components.

In some embodiments, the flow cell nozzle and the optical adjustment component are in optical communication, but are not physically in contact. Depending on the size of the flow cell nozzle chamber, the optical adjustment component may be positioned from the proximal end of the flow cell nozzle chamber a distance that is 0.05 mm or more, 0.1 mm or more, such as 0.2 mm or more, such as 0.5 mm or more, such as 1 mm or more, such as 5 mm or more, such as 10 mm or more, such as 25 mm or more, such as 50 mm or more, including 100 mm or more. In other embodiments, the optical adjustment component is physically coupled to the flow cell nozzle, such as with an adhesive, co-molded together or integrated together in a housing having the optical adjustment component positioned adjacent to the proximal end of the flow cell nozzle. As such, the optical adjustment component and flow cell nozzle may be integrated into a single unit.

In some embodiments, the optical adjustment component is a focusing lens having a magnification ratio of from 0.1 to 0.95, such as a magnification ratio of from 0.2 to 0.9, such as a magnification ratio of from 0.3 to 0.85, such as a magnification ratio of from 0.35 to 0.8, such as a magnification ratio of from 0.5 to 0.75 and including a magnification ratio of from 0.55 to 0.7, for example a magnification ratio of 0.6. For example, the focusing lens is, in certain instances, a double achromatic de-magnifying lens having a magnification ratio of about 0.6. Depending on the distance between the nozzle orifice and the lens, the size of the flow cell nozzle chamber, the focal length of the focusing lens may vary, ranging from 5 mm to 20 mm, such as from 6 mm to 19 mm, such as from 7 mm to 18 mm, such as from 8 mm to 17 mm, such as from 9 mm to 16 and including a focal length ranging from 10 mm to 15 mm. In certain embodiments, the focusing lens has a focal length of about 13 mm.

In other embodiments, the optical adjustment component is a collimator. The collimator may be any convenient collimating protocol, such as one or more mirrors or curved lenses or a combination thereof. For example, the collimator is in certain instances a single collimating lens. In other instances, the collimator is a collimating mirror. In yet other instances, the collimator includes two lenses. In still other instances, the collimator includes a mirror and a lens. Where the collimator includes one or more lenses, the focal length of the collimating lens may vary, ranging from 5 mm to 40 mm, such as from 6 mm to 37.5 mm, such as from 7 mm to 35 mm, such as from 8 mm to 32.5 mm, such as from 9 mm to 30 mm, such as from 10 mm to 27.5 mm, such as from 12.5 mm to 25 mm and including a focal length ranging from 15 mm to 20 mm.

In certain embodiments, the optical adjustment component is a wavelength separator. The term "wavelength separator" is used herein in its conventional sense to refer to an optical protocol for separating polychromatic light into its component wavelengths for detection. Wavelength separation, according to certain embodiments, may include selectively passing or blocking specific wavelengths or wavelength ranges of the polychromatic light. Wavelength separation protocols of interest which may be a part of or combined with the subject flow cell nozzles, include but are not limited to, colored glass, bandpass filters, interference filters, dichroic mirrors, diffraction gratings, monochromators and combinations thereof, among other wavelength separating protocols.

Depending on the light source and sample being assayed, the subject flow cell nozzles may include one or more wavelength separators, such as two or more, such as three or more, such as four or more, such as five or more and including 10 or more wavelength separators. Where systems include two or more wavelength separators, the wavelength separators may be utilized individually or in series to separate polychromatic light into component wavelengths. In some embodiments, wavelength separators are arranged in series. In other embodiments, wavelength separators are arranged individually such that one or more measurements are conducted to collect the light using each of the wavelength separators.

In some embodiments, the subject flow cell nozzles include one or more optical filters. In certain instances, optical filters include a bandpass filter having minimum bandwidths ranging from 2 nm to 100 nm, such as from 3 nm to 95 nm, such as from 5 nm to 95 nm, such as from 10 nm to 90 nm, such as from 12 nm to 85 nm, such as from 15 nm to 80 nm and including bandpass filters having minimum bandwidths ranging from 20 nm to 50 nm.

In some instances, light emitted by the sample in the flow stream is propagated upstream through the nozzle orifice by total internal reflectance. Where the subject flow cell nozzles include one or more optical adjustment components configured to collect and adjust light emitted through the nozzle orifice, the distance between the nozzle orifice and the optical adjustment component may vary. Depending on the size of the flow cell nozzle and desired optical adjustment, the nozzle orifice and optical adjustment component may be separated by 5 mm or more, such as 10 mm or more, such as 25 mm or more, such as 35 mm or more, such as 50 mm or more, such as 65 mm or more, such as 75 mm or more, such as 100 mm or more, such as 250 mm or more and including by 500 mm or more. For example, the distance between the nozzle orifice and optical adjustment component may range from 5 mm to 500 mm, such as 10 mm to 400 nm, such as from 15 mm to 300 mm, such as from 25 mm to 250 mm, such as from 35 mm to 200 mm and including from 50 mm to 100 mm.

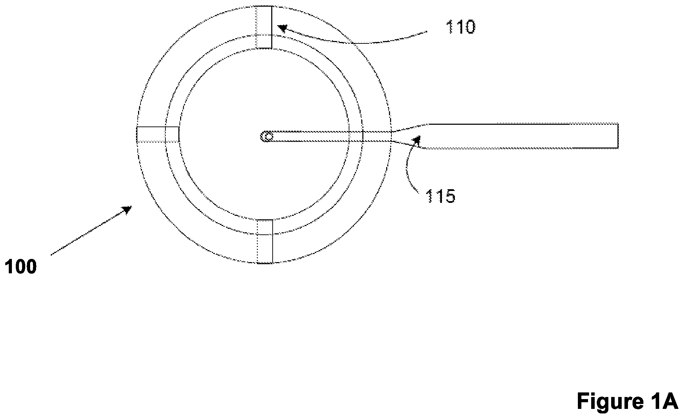

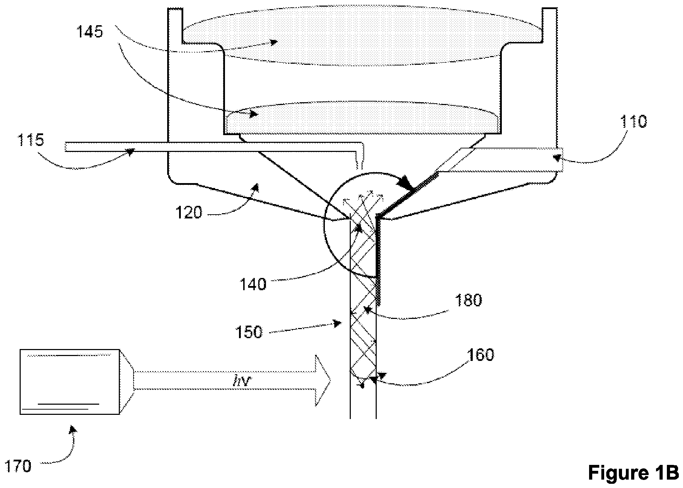

The schematic diagrams in FIGS. 1A and 1B illustrate various aspects of flow cell nozzles according certain embodiments. FIG. 1A is a top view of nozzle 100 which includes one or more sheath fluid injection ports 110 to provide sheath fluid to the nozzle chamber. A sample injection port 115 is provided to direct a sample such as a biological sample to the nozzle chamber and subsequently both liquids may be directed to the nozzle orifice as a flow stream.

FIG. 1B depicts a cross sectional schematic illustration of a flow cell nozzle according to certain embodiments. FIG. 1B shows nozzle chamber 120 providing a housing for lens system 145. The lens system may include one, two or more lenses that are configured to direct signal light to a light collection device. The nozzle chamber 120 includes sheath injection port 110, and sample injection port 115. These ports provide for delivery of sample and sheath fluid to the nozzle chamber. These materials exit the nozzle chamber 120 via nozzle orifice 140 as a flow stream 150. As described above, nozzle orifice 140 may have any suitable size as desired, such as between 1 µm and 2 mm in diameter including between 1 and 2 mm. The distance between the nozzle orifice 140 and a first lens in the lens system 145 may be any distance such as between 1 and 500 mm, including between 2 and 100 mm. In some embodiments, the flow chamber may include internally sloped walls that form and angle between 130º and 150º relative to the vector of the flow channel. In some embodiments, the thickness of the nozzle tip at the orifice 140 may be no more than the 1/4 of width of the flow channel, such as no more than 0.5 mm, including no more than 0.25 mm.

Flow channel 150 exits nozzle orifice 140 and passes through an interrogation field 160 where light from light source 170 irradiates the flow stream. In some embodiments, a portion of the light scattered and/or emitted from the sample may exit the flow stream where it may be detected with one or more detectors. In some instances, light 180 is internally reflected along the walls by total internal reflectance up the flow stream, with the walls acting as a wave guide for the light. A portion of total internal reflectance light 180 is collected by lens system 145 in nozzle chamber 120. In some embodiments, greater than 90% of the light emitted from the orifice 140 may be collected by the lens system 145. The lens system may direct the light to a light collection system (as described in greater detail below) such as a CCD camera or other device for collecting and/or quantifying a light signal.

### SYSTEMS FOR MEASURING LIGHT EMITTED BY A SAMPLE IN A FLOW STREAM

Aspects of the present disclosure include systems for measuring light emitted by a sample in a flow stream. In embodiments of the present disclosure, the subject systems are configured to measure light emitted by a sample in a flow stream which is propagated upstream through the flow cell nozzle orifice by total internal reflectance by the fluid medium of the flow stream. As discussed above, the term "upstream" refers to emitted light propagated and collected in a direction which is opposite to the direction of fluid flow by the flow stream. In other words, where the flow cell nozzle is positioned to generate a flow stream which traverses along the positive Y direction along the Y axis in an X-Y plane, flow cell nozzles are configured to propagate light in the negative Y direction. Likewise, where the flow cell nozzle is positioned to generate a flow stream which traverses along the positive X direction along the X axis in an X-Y plane, flow cell nozzles are configured to propagate light in the negative X direction.

As discussed above, the light measured by the subject systems is light emitted by a sample in a flow stream that is propagated upstream back through the nozzle orifice into the nozzle chamber by total internal reflectance. As such, light measured in embodiments of the present disclosure includes light which is propagated within the boundaries of a fluid medium such that the light remains within the boundaries of the flow stream medium. As described in greater detail below, in some embodiments, a light source irradiates a flow stream in a detection field downstream from the nozzle orifice and the subject systems are configured to measure light which is propagated upstream back into flow cell nozzle chamber through the nozzle orifice by total internal reflectance.

As summarized above, systems include one or more flow cell nozzles (as described above), a light source for irradiating a flow stream emanating from the nozzle orifice and a detector for measuring light emitted by a sample in the flow stream propagated upstream through the nozzle orifice by total internal reflectance.

In embodiments, systems include one or more light sources for irradiating the flow stream with light in one or more interrogation fields. By "interrogation field" is meant the region of the flow stream which is irradiated by the one or more light sources. Interrogation fields may vary depending on the properties of the flow stream being interrogated. In embodiments, the interrogation field may span 0.001 mm or more of the flow stream, such as 0.005 mm or more, such as 0.01 mm or more, such as 0.05 mm or more, such as 0.1 mm or more, such as 0.5 mm or more and including 1 mm or more of the flow stream. For example, the interrogation field may be a planar cross-section of the flow stream irradiated, such as, with a focused laser. In another example, the detection field may be a predetermined length of the flow stream, such as for example corresponding to the irradiation profile of a diffuse laser beam or lamp.

In some embodiments, systems of interest include one or more light sources which are positioned to interrogate the flow stream at or near the flow cell nozzle orifice. For example, the interrogation field may be about 0.001 mm or more from the nozzle orifice, such as 0.005 mm or more, such as 0.01 mm or more, such as 0.05 mm or more, such as 0.1 mm or more, such as 0.5 mm or more and including 1 mm or more from the nozzle orifice. In other words, the flow stream is irradiated at a region that is 0.001 mm or more from nozzle orifice, such as 0.005 mm or more, such as 0.01 mm or more, such as 0.05 mm or more, such as 0.1 mm or more, such as 0.5 mm or more and including irradiating the flow stream at a region which is positioned 1 mm or more of from the nozzle orifice.

In some embodiments, systems of interest are configured to irradiate the flow stream at or near the break-off point of the flow stream. The term "break-off point" is used herein in its conventional sense to refer to the point in the flow stream at which the continuous flow stream begins to form droplets. For example the interrogation field may be positioned about 0.001 mm or more from the break-off point of the flow stream, such as 0.005 mm or more, such as 0.01 mm or more, such as 0.05 mm or more, such as 0.1 mm or more, such as 0.5 mm or more and including 1 mm or more from the break-off point of the flow stream. In other words, the flow stream is irradiated at a region that is 0.001 mm or more from break-off point, such as 0.005 mm or more, such as 0.01 mm or more, such as 0.05 mm or more, such as 0.1 mm or more, such as 0.5 mm or more and including irradiating the flow stream at a region which is positioned 1 mm or more of from the break-off point.

Systems include one or more light sources for irradiating the flow stream with light in one or more interrogation fields. In some embodiments, the light source is a broadband light source, emitting light having a broad range of wavelengths, such as for example, spanning 50 nm or more, such as 100 nm or more, such as 150 nm or more, such as 200 nm or more, such as 250 nm or more, such as 300 nm or more, such as 350 nm or more, such as 400 nm or more and including spanning 500 nm or more. For example, one suitable broadband light source emits light having wavelengths from 200 nm to 1500 nm. Another example of a suitable broadband light source includes a light source that emits light having wavelengths from 400 nm to 1000 nm. Any convenient broadband light source protocol may be employed, such as a halogen lamp, deuterium arc lamp, xenon arc lamp, stabilized fiber-coupled broadband light source, a broadband LED with continuous spectrum, superluminescent emitting diode, semiconductor light emitting diode, wide spectrum LED white light source, an multi-LED integrated white light source, among other broadband light sources or any combination thereof.

In other embodiments, the light source is a narrow band light source emitting a particular wavelength or a narrow range of wavelengths. In some instances, the narrow band light sources emit light having a narrow range of wavelengths, such as for example, 50 nm or less, such as 40 nm or less, such as 30 nm or less, such as 25 nm or less, such as 20 nm or less, such as 15 nm or less, such as 10 nm or less, such as 5 nm or less, such as 2 nm or less and including light sources which emit a specific wavelength of light (i.e., monochromatic light). Any convenient narrow band light source protocol may be employed, such as a narrow wavelength LED, laser diode or a broadband light source coupled to one or more optical bandpass filters, diffraction gratings, monochromators or any combination thereof.

In certain embodiments, the light source is a laser. In some instances, the subject systems include a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCI) excimer laser or xenon-fluorine (XeF) excimer laser or a combination thereof. In others instances, the subject systems include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject systems include a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

The subject systems may include one or more light sources, as desired, such as two or more light sources, such as three or more light sources, such as four or more light sources, such as five or more light sources and including ten or more light sources. The light source may include any combination of types of light sources. For example, in some embodiments, the subject systems include an array of lasers, such as an array having one or more gas lasers, one or more dye lasers and one or more solid-state lasers. In other instances, where two lights sources are employed, a first light source may be a broadband white light source (e.g., broadband white light LED) and second light source may be a broadband near-infrared light source (e.g., broadband near-IR LED). In other instances, where two light sources are employed, a first light source may be a broadband white light source (e.g., broadband white light LED) and the second light source may be a narrow spectra light source (e.g., near-IR LED or laser). In yet other instances, the light source is a plurality of narrow band light sources each emitting specific wavelengths, such as two or more lasers, such as three or more lasers including 5 or more lasers. In still other instances, the light source is an array of two or more LEDs, such as an array of three or more LEDs, such as an array of five or more LEDs, including an array of ten or more LEDs.

In some embodiments, light sources emit light having wavelengths ranging from 200 nm to 1500 nm, such as from 250 nm to 1250 nm, such as from 300 nm to 1000 nm, such as from 350 nm to 900 nm and including from 400 nm to 800 nm. For example, the light source may include a broadband light source emitting light having wavelengths from 200 nm to 900 nm. In other instances, the light source includes a plurality of narrow band light sources emitting wavelengths ranging from 200 nm to 900 nm. For example, the light source may be plurality of narrow band LEDs (1 nm - 25 nm) each independently emitting light having a range of wavelengths between 200 nm to 900 nm. In some embodiments, the narrow band light source is one or more narrow band lamps emitting light in the range of 200 nm to 900 nm, such as a narrow band cadmium lamp, cesium lamp, helium lamp, mercury lamp, mercury-cadmium lamp, potassium lamp, sodium lamp, neon lamp, zinc lamp or any combination thereof. In other embodiments, the narrow band light source includes one or more lasers emitting light in the range of 200 nm to 1000 nm, such as gas lasers, excimer lasers, dye lasers, metal vapor lasers and solid-state laser as described above.

Depending on the assay protocol, the subject systems may be configured to irradiate the flow stream in continuous or in discrete intervals. For example, in some embodiments, systems may be configured to irradiate the flow stream continuously. Where the light includes two or more light sources, the flow stream may be continuously irradiated by all of the light sources simultaneously. In other instances, the flow stream is continuously irradiated with each light source sequentially. In other embodiments, the flow stream may be irradiated in regular intervals, such as irradiated the sample every 0.001 microseconds, every 0.01 microseconds, every 0.1 microseconds, every 1 microsecond, every 10 microseconds, every 100 microseconds and including every 1000 microseconds.

The flow stream may be irradiated with the light source one or more times at any given measurement period, such as 2 or more times, such as 3 or more times, including 5 or more times at each measurement period.

Where more than one light source is employed, the flow stream may be irradiated at the interrogation field with the light sources simultaneously or sequentially, or a combination thereof. For example, where the flow stream is irradiated with two lasers, the subject systems may be configured to simultaneously irradiate the flow stream with both lasers. In other embodiments, the flow stream at the interrogation field is sequentially irradiated by two lasers. Where the sample is sequentially irradiated with two or more lasers, the time each light source irradiates the flow stream may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, the laser may be configured to irradiate the flow stream for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. In embodiments where the flow stream is sequentially irradiated by two or more lasers, the duration the flow stream is irradiated by each light source may be the same or different.

The time period between irradiation of the flow stream at the interrogation field by each light source may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation of the flow stream at the interrogation field by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In certain embodiments, the time period between irradiation of the flow stream at the interrogation field by each light source is 10 microseconds. In embodiments where the subject systems are configured to sequentially irradiate the flow stream by more than two (i.e., three or more) light sources, the delay between irradiation by each light source may be the same or different.

The light source may be positioned at a distance from the flow stream which varies depending on the type of light source and characteristics of the flow stream (e.g., flow stream width). For example, the light source may be positioned 0.01 mm or more from the flow stream, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more from the flow stream. The light source may also be positioned at an angle with respect to the flow stream in each interrogation field which also varies. For example, the light source may be positioned at an angle with respect to the axis of the flow stream which ranges from 10° to 90°, such as from 15° to 85°, such as from 20° to 80°, such as from 25° to 75° and including from 30° to 60°. In certain embodiments, the light source is positioned at a 90° angle with respect to the axis of the flow stream.

As discussed above, in embodiments of the present disclosure the subject systems are configured to measure light emitted by a sample in a flow stream which is propagated upstream by total internal reflectance by the medium of the flow stream. The subject systems are configured to irradiate the flow stream with a light source in an interrogation field downstream from the flow nozzle orifice and are configured to measure light which is propagated upstream back into flow cell nozzle chamber through the nozzle orifice by total internal reflectance. In embodiments, systems include one or more detectors configured for measuring light emitted by the sample.

As described above, flow cells of interest include a nozzle chamber with a distal end having a nozzle orifice in fluid communication with the flow stream and a proximal end where light propagated upstream is directed. For example, certain flow cell nozzles include a proximal cylindrical portion defining a longitudinal axis and a distal frustoconical portion which terminates in a flat surface having the nozzle orifice that is transverse to the longitudinal axis.

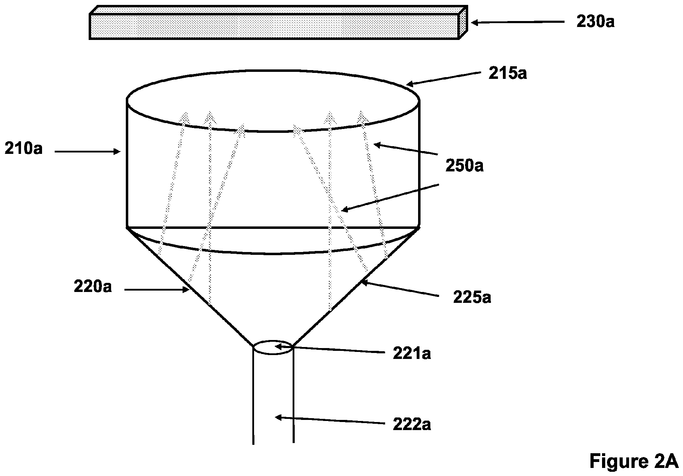

Systems of the present disclosure also include one or more detectors. In some embodiments, one or more detectors are positioned at the proximal end of the nozzle chamber. Where the flow cell nozzle includes a proximal cylindrical portion and a distal frustoconical portion, the one or more detectors may be positioned at or near the proximal end of the nozzle chamber. Figures 2A-2B illustrate a configuration of a detector positioned at or near the proximal end of the flow cell nozzle chamber.

FIG. 2A depicts the positioning of a detector with respect to the flow cell nozzle according to some embodiments of the present disclosure. Flow cell nozzle 200a has a nozzle chamber which includes a proximal cylindrical portion 210a and a distal frustoconical portion 220a. Distal frustoconical portion 220a includes nozzle orifice 221a which is in fluid communication with flow stream 222a. Distal frustoconical portion includes angled side walls 225a which may be reflective and angled to direct light 250a toward proximal end 215a of the flow cell nozzle 221a (as described above). FIG. 2A depicts an example configuration where detector 230a is positioned adjacent to proximal end 210a of the flow cell nozzle chamber.

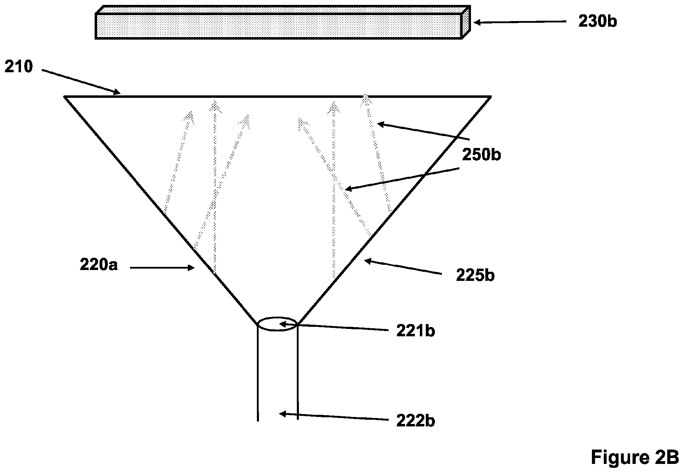

FIG. 2B depicts the positioning of a detector with the flow cell nozzle according to other embodiments of the present disclosure. Flow cell nozzle 200b has a frustoconical-shaped nozzle chamber which includes a proximal end 210b and a distal end 220b. Distal end 220b includes nozzle orifice 221b which is in fluid communication with flow stream 222b. Distal end 220b also includes angled side walls 225b which may be reflective and angled to direct light 250b toward proximal end 210b of the flow cell nozzle chamber. FIG. 2B depicts an example configuration where detector 230b is positioned adjacent to proximal end 210b of the flow cell nozzle chamber.

Detectors of interest may include, but are not limited to optical sensors or photodetectors, such as active-pixel sensors (APSs), avalanche photodiode, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes, phototransistors, quantum dot photoconductors or photodiodes and combinations thereof, among other photodetectors. In certain embodiments, the transmitted light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In some embodiments, the imaging sensor is a CCD camera. For example, the camera may be an electron multiplying CCD (EMCCD) camera or an intensified CCD (ICCD) camera. In other embodiments, the imaging sensor is a CMOS-type camera. Where the transmitted light is measured with a CCD, the active detecting surface area of the CCD may vary, such as from 0.01 cm² to 10 cm², such as from 0.05 cm² to 9 cm², such as from, such as from 0.1 cm² to 8 cm², such as from 0.5 cm² to 7 cm² and including from 1 cm² to 5 cm².

The number of photodetectors in the subject systems may vary, as desired. For example, the subject systems may include one photodetector or more, such as two photodetectors or more, such as three photodetectors or more, such as four photodetectors or more, such as five photodetectors or more and including ten photodetectors or more. In certain embodiments, systems include one photodetector. In other embodiments, systems include two photodetectors. Each photodetector may be oriented with respect to proximal end of the flow cell nozzle (as referenced in an X-Y plane) at an angle which varies, such as at an angle of 60° or less, such as 55° or less, such as 50° or less, such as 45° or less, such as 30° or less, such as 15° or less, such as 10° or less and including orienting the photodetector such that the active detection surface faces the proximal end of the flow cell nozzle (Figs. 3a and 3b)

Where the subject systems include more than one photodetector, each photodetector may be the same, or the collection of two or more photodetectors may be a combination of different photodetectors. For example, where the subject systems include two photodetectors, in some embodiments the first photodetector is a CCD-type device and the second photodetector (or imaging sensor) is a CMOS-type device. In other embodiments, both the first and second photodetectors are CCD-type devices. In yet other embodiments, both the first and second photodetectors are CMOS-type devices. In still other embodiments, the first photodetector is a CCD-type device and the second photodetector is a photomultiplier tube. In still other embodiments, the first photodetector is a CMOS-type device and the second photodetector is a photomultiplier tube. In yet other embodiments, both the first and second photodetectors are photomultiplier tubes.

In embodiments of the present disclosure, detectors of interest are configured to measure light emitted by a sample in the flow stream at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths.

In some embodiments, detectors of interest are configured to measure light emitted by a sample in the flow stream over a range of wavelengths (e.g., 200 nm - 1000 nm). In certain embodiments, detectors of interest are configured to collect spectra of light over a range of wavelengths. For example, systems may include one or more detectors configured to collect spectra of light over one or more of the wavelength ranges of 200 nm - 1000 nm. In yet other embodiments, detectors of interest are configured to measure light emitted by a sample in the flow stream at one or more specific wavelengths. For example, systems may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, one or more detectors may be configured to be paired with specific fluorophores, such as those used with the sample in a fluorescence assay.

In embodiments, the detector is configured to measure light continuously or in discrete intervals. In some instances, detectors of interest are configured to take measurements of the light emitted by a sample in the flow stream continuously. In other instances, detectors of interest are configured to take measurements in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

In some instances, the photodetector also includes an optical adjustment component. In some instances, optical adjustment is a magnification protocol configured to increase the size of the field of light captured by the detector, such as by 5% or greater, such as by 10% or greater, such as by 25% or greater, such as by 50% or greater and including increasing the field of light captured by the detector by 75% or greater. In other instances, optical adjustment is a de-magnification protocol configured to decrease the field of light captured by the detector, such as by 5% or greater, such as by 10% or greater, such as by 25% or greater, such as by 50% or greater and including decreasing the field of light captured by the detector by 75% or greater. In certain embodiments, optical adjustment is a focusing protocol configured to focus the light collected by the detector, such as by focusing the beam of collected light by 5% or greater, such as by 10% or greater, such as by 25% or greater, such as by 50% or greater and including focusing the beam of collected light by 75% or greater.

Optical adjustment components may be any convenient device or structure which provides the desired change in the collected light beam and may include but is not limited to lenses, mirrors, pinholes, slits, gratings, light refractors, and any combinations thereof. The detector may include one or more optical adjustment components as needed, such as two or more, such as three or more, such as four or more and including five or more optical adjustment components. In certain embodiments, the detector includes a focusing lens. The focusing lens, for example may be a de-magnifying lens. In other instances, the focusing lens is a magnifying lens. In other embodiments, the detector includes a collimator.

In certain embodiments, systems include a combination of different optical adjustment components, such as a combination of pinholes, lenses, mirrors, slits, etc. For example, in some embodiments, systems include a focusing lens and a collimating lens. In other embodiments, systems include a collimating mirror and a focusing lens. In yet other embodiments, systems include a focusing lens and a pinhole structure. In still other embodiments, systems include a collimating lens and a pinhole structure. In still other embodiments, systems include a collimating lens and a slit structure.

In some embodiments, the detector and the optical adjustment component are in optical communication, but are not physically in contact. Depending on the size of the detector, the optical adjustment component may be positioned 0.05 mm or more from the detector, 0.1 mm or more, such as 0.5 mm or more, such as 1 mm or more, such as 10 mm or more, such as 25 mm or more, such as 50 mm or more, such as 100 mm or more, such as 250 mm or more, including 500 mm or more. In other embodiments, the optical adjustment component is physically coupled to the detector, such as with an adhesive, co-molded together or integrated together in a housing having the optical adjustment component positioned adjacent to the detector. As such, the optical adjustment component and detector may be integrated into a single unit.

In some embodiments, the optical adjustment component is a focusing lens having a magnification ratio of from 0.1 to 0.95, such as a magnification ratio of from 0.2 to 0.9, such as a magnification ratio of from 0.3 to 0.85, such as a magnification ratio of from 0.35 to 0.8, such as a magnification ratio of from 0.5 to 0.75 and including a magnification ratio of from 0.55 to 0.7, for example a magnification ratio of 0.6. For example, the focusing lens is, in certain instances, a double achromatic de-magnifying lens having a magnification ratio of about 0.6. Depending on the distance between the detector and the lens, the surface area of the detector active surface, the focal length of the focusing lens may vary, ranging from 5 mm to 20 mm, such as from 6 mm to 19 mm, such as from 7 mm to 18 mm, such as from 8 mm to 17 mm, such as from 9 mm to 16 and including a focal length ranging from 10 mm to 15 mm. In certain embodiments, the focusing lens has a focal length of about 13 mm.

In certain embodiments, optical adjustment components include one or more fiber optics which are configured to relay light from the flow cell nozzle chamber to the detector. Suitable fiber optics for propagating light from the flow cell nozzle to the active surface of the detector include, but is not limited to, flow cytometer fiber optics systems such as those described in United States Patent No. 6,809,804.

In other embodiments, detectors of interest are coupled to a collimator. The collimator may be any convenient collimating protocol, such as one or more mirrors or curved lenses or a combination thereof. For example, the collimator is, in certain instances, a single collimating lens. In other instances, the collimator is a collimating mirror. In yet other instances, the collimator includes a series of two or more lenses, such as three or more lenses and including four or more lenses. In still other instances, the collimator includes a mirror and a lens. Where the collimator includes one or more lenses, the focal length of the collimating lens may vary, ranging from 5 mm to 40 mm, such as from 6 mm to 37.5 mm, such as from 7 mm to 35 mm, such as from 8 mm to 32.5 mm, such as from 9 mm to 30 mm, such as from 10 mm to 27.5 mm, such as from 12.5 mm to 25 mm and including a focal length ranging from 15 mm to 20 mm.

In certain embodiments, the optical adjustment component is a wavelength separator. As discussed above, wavelength separators of interest refer to an optical protocol for separating polychromatic light into its component wavelengths for detection. Wavelength separation, according to certain embodiments, may include selectively passing or blocking specific wavelengths or wavelength ranges of the polychromatic light. To separate wavelengths of light, the light emitted by a sample in the flow stream may be passed through any convenient wavelength separating protocol, including but not limited to colored glass, bandpass filters, interference filters, dichroic mirrors, diffraction gratings, monochromators and combinations thereof, among other wavelength separating protocols. Systems may include one or more wavelength separators, such as two or more, such as three or more, such as four or more, such as five or more and including 10 or more wavelength separators. In one example, detectors include one bandpass filter. In another example, detectors include two or more bandpass filters. In another example, detectors include two or more bandpass filters and a diffraction grating. In yet another example, detectors include a monochromator. In certain embodiments, detectors include a plurality of bandpass filters and diffraction gratings configured into a filter wheel setup. Where detectors include two or more wavelength separators, the wavelength separators may be utilized individually or in series to separate polychromatic light into component wavelengths. In some embodiments, wavelength separators are arranged in series. In other embodiments, wavelength separators are arranged individually such that one or more measurements are conducted using each of the wavelength separators.

In some embodiments, detectors include one or more optical filters, such as one or more bandpass filters. For example, optical filters of interest may include bandpass filters having minimum bandwidths ranging from 2 nm to 100 nm, such as from 3 nm to 95 nm, such as from 5 nm to 95 nm, such as from 10 nm to 90 nm, such as from 12 nm to 85 nm, such as from 15 nm to 80 nm and including bandpass filters having minimum bandwidths ranging from 20 nm to 50 nm. In other embodiments, the wavelength separator is a diffraction grating. Diffraction gratings may include, but are not limited to transmission, dispersive or reflective diffraction gratings. Suitable spacings of the diffraction grating may vary depending on the configuration of the flow nozzle chamber, detector and other optical adjust protocols present (e.g., focusing lens), ranging from 0.01 µm to 10 µm, such as from 0.025 µm to 7.5 µm, such as from 0.5 µm to 5 µm, such as from 0.75 µm to 4 µm,such as from 1 µm to 3.5 µm and including from 1.5 µm to 3.5 µm.

In certain embodiments, the subject systems are flow cytometric systems employing the above described flow cell nozzles and optics subsystems for detecting light emitted by a sample in a flow stream by total internal reflectance. For example, the flow cytometer may be configured to include a flow cell nozzle which is configured to propagate light emitted by a sample in a flow stream upstream through the nozzle orifice by total internal reflectance. Suitable flow cytometry systems and methods for analyzing samples include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255. In certain instances, flow cytometry systems of interest include BD Biosciences FACSCanto^{™} flow cytometer, BD Biosciences FACSVantage^{™}, BD Biosciences FACSort^{™}, BD Biosciences FACSCount^{™}, BD Biosciences FACScan^{™}, and BD Biosciences FACSCalibur^{™} systems, a BD Biosciences Influx^{™} cell sorter, or the like.

In certain embodiments, the subject systems are flow cytometric systems, such those described in U.S. Patent No. 3,960,449; 4,347,935; 4,667,830; 5,245,318; 5,464,581; 5,483,469; 5,602,039; 5,643,796; and 5,700,692.

In some embodiments, systems provided by the present disclosure are configured for the collection of light from a sample in a flow cytometer that includes a lens system disposed in or above a nozzle housing whereby a flow channel is configured to flow from the nozzle to an interrogation zone and the lens system collects the light from above the flow channel. The system includes an irradiation source configured to direct a beam of probing light at the flow channel in an interrogation zone. The lens system operably connected to the nozzle is configured to collect light emitted from the nozzle orifice without disrupting the flow channel. This system beneficially provides for improved light collection while simultaneously providing for accurate collection of samples in the flow channel.

An aim of flow cytometry is to determine the amount of light that is being emitted by fluorescent particles in a sample that are suspended in aqueous solution. The particles emit light in all directions. In jet-in-air systems a channel of particles may be transported within a cylindrically shaped channel of fluid across the path of a focused, external light source. In some embodiments, the light signals emitted and scattered from the particles after passing through path of the focused light source are collected by detectors that surround the flow channel. Not all light signals may be observed from outside the flow channel. A significant fraction of the light stays trapped inside the cylindrical column of the flow channel as the channel acts as a wave guide. Light rays that approach the water/air interface with an angle exceeding a critical angle (called the Angle of Total Internal Reflection) are reflected back into the medium. The TIR angle of water to air interface is arc sin (1/1.33) =48.7°. Consequently, two cones of light along the axis of the flow channel, one above and one below the light-emitting particle are trapped inside the flow cytometer flow channel. For an isotropically fluorescing particle the trapped light inside in each of the cones represents 2pi(1-cos(90-48.7))/4pi or 0.1244of the total fluorescence emission. Thus about one-quarter of the light signals stays inside the channel and cannot be observed from the outside.

One aspect of this invention is the beneficial utilization of the geometry of the fluid path and nozzle assembly to allow collection of the internally reflected light signal in a flow cytometer system. The method utilizes a minimum number of optical components and generates a minimum amount of disruption to the fluid flow of the flow channel. In some embodiments the signal collected by the methods of this invention may be used to direct the cell sorting and collection of cells in a flow stream. The collection of the same amount of light outside the flow channel would require a sophisticated optical assembly with a Numerical Aperture (NA) on the order of 1.0. Typically, flow cytometers have light collection systems with an NA on the order of 0.6. The Total Internal Reflectance (TIR) collection system of this invention may harvest about three times more light than standard flow cytometer light collection systems. The collection of light this manner may disrupt or contaminate the flow stream and is therefore incompatible with a cell sorting application that may be performed using methods of this invention. Additionally the method of the present invention may provide for the increased collection of light from a flow stream relative to an 'in-flow' collection system because light may be collected from the entire flow stream rather than a fraction of the flow stream.

In some embodiments, light trapped inside a flow channel bounces off the channel surface until it passes through the nozzle orifice into the nozzle chamber. Much of the light entering the chamber will proceed to the roof of the chamber where it may be collected by a lens system. In some embodiments, the inside shape of the nozzle chamber is conically shaped with an angle relative to the incoming light that slightly exceeds the TIR angle such that all or most of the light passing through the nozzle orifice will reach the lens system. The internal angle of the fluid chamber in the nozzle may be slanted at around 135 (e.g., 130 to 140) degrees relative to the direction of the flow channel to provide for a maximum amount of light collection from and aqueous flow channel. A lens system may comprise a single lens mounted in the chamber roof to redirect light onto a light detection system (e.g., CCD camera). In some embodiments, substantially all of the light trapped within the cytometer flow channel that is directed towards the nozzle tip may be collected.

Most fluorescent dyes, when accepting and emitting light in a single, isolated event, will exhibit anisotropic emission. The emission intensity in the plane of the excitation/relaxation dipole is much larger than in a plane perpendicular to it. Certain fluorescently labelled cells (e.g., gametes) emit fluorescence heterogeneously as a result of their irregular shape often making fluorescence measurements dependent cell-orientation. As a result, the fluorescence intensity that is measured depends on the observation angle with respect to the polarization plane of the excitation source. By judiciously selecting the plane of polarization of the excitation source the amount of light being emitted in the direction of the roof of the nozzle chamber the signal intensity may be maximized. In one aspect of this invention, the combination of the mirror-like properties of flow channel and the geometry of the nozzle orifice may function as an optical system with spatial selectivity that provides signal light emitted or scattered from a sample to be directed a collection system. The flow channel guides the signal light such that the nozzle orifice is homogeneously irradiated, generating an enlarged orifice-sized image of the irradiated particle.

In certain embodiments, systems of interest isotropically collect light emitted by a sample in the flow channel. The term "isotropic" is used herein in its conventional sense to mean uniform in all directions, such that light emitted by a sample in the flow channel is collected uniformly in all directions. In embodiments, collection of light by systems of interest is independent of cell-orientation, shape and polarization of light emitted from the sample. Accordingly, heterogeneously emitted light or plane polarized light may be collected with the subject systems without any additional adjustment optics (e.g., polarizers, mirrors). For example, the flow channel/nozzle orifice combination performs the functions of a complex external lens system. In addition, the system may not require any alignment. As the signals from the particles traverse the nozzle opening, the image from the nozzle aperture is projected as a fixed lens onto the light detection system. The invention beneficially provides a method to collect light emitted by the flow channel without the use of finely attuned optics because the higher N.A. of the flow channel provides more light than is traditionally collected by optics directed perpendicular to the flow channel.

### METHODS FOR MEASURING LIGHT EMITTED BY A SAMPLE IN A FLOW STREAM

Aspects of the disclosure also include methods for measuring light emitted from a sample in a flow stream. Methods according to certain embodiments include measuring light emitted by a sample in a flow stream which is propagated upstream through the flow cell nozzle orifice by total internal reflectance by the fluid medium of the flow stream. As discussed above, in embodiments of the present disclosure methods include measuring light emitted by a sample which is propagated upstream through the flow cell nozzle orifice by total internal reflectance by the medium of the flow stream. Methods include, in certain instances, irradiating the flow stream with a light source in an interrogation field downstream from the flow nozzle orifice and measuring light which is propagated upstream back into flow cell nozzle chamber through the nozzle orifice by total internal reflectance.

In some embodiments, the sample is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class mammalia, including the orders carnivore (e.g., dogs and cats), rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present invention may be applied to samples from a human subject, it is to be understood that the methods may also be carried-out on samples from other animal subjects (that is, in "non-human subjects") such as, but not limited to, birds, mice, rats, dogs, cats, livestock and horses.

In embodiments, the amount of sample injected into the flow cell nozzle through the sample injection port may vary, for example, ranging from 0.01 µL to 1000 µL, such as from 0.05 µL to 900 µL , such as from 0.1 µL to 800 µL, such as from 0.5 µL to 700 µL, such as from 1 µL to 600 µL, such as from 2.5 µL to 500 µL, such as from 5 µL to 400 µL, such as from 7.5 µL to 300 µL and including from 10 µL to 200 µL of sample.

In practicing methods according to certain embodiments, a sample in a flow stream is irradiated in one or more interrogation fields with light by a light source. Depending on the properties of the flow stream being interrogated, 0.001 mm or more of the flow stream may be irradiated with light, such as 0.005 mm or more, such as 0.01 mm or more, such as 0.05 mm or more, such as 0.1 mm or more, such as 0.5 mm or more and including 1 mm or more of the flow stream may be irradiated with light. In certain embodiments, methods include irradiating a planar cross-section of the flow stream, such as with a laser (as described above). In other embodiments, methods include irradiating a predetermined length of the flow stream, such as corresponding to the irradiation profile of a diffuse laser beam or lamp.

In certain embodiments, methods including irradiating the flow stream at or near the flow cell nozzle orifice. For example, methods may include irradiating the flow stream at a position about 0.001 mm or more from the nozzle orifice, such as 0.005 mm or more, such as 0.01 mm or more, such as 0.05 mm or more, such as 0.1 mm or more, such as 0.5 mm or more and including 1 mm or more from the nozzle orifice. In certain embodiments, methods include irradiating the flow stream immediately adjacent to the flow cell nozzle orifice.

In some embodiments, the flow stream is irradiated at or near the break-off point of the flow stream. As discussed above, the break-off point refers to the point in the flow stream at which the continuous flow stream begins to form droplets. In these embodiments, methods include irradiating the flow stream about 0.001 mm or more from the break-off point of the flow stream, such as 0.005 mm or more, such as 0.01 mm or more, such as 0.05 mm or more, such as 0.1 mm or more, such as 0.5 mm or more and including 1 mm or more from the break-off point of the flow stream.

In irradiating the flow stream, the interrogation field is irradiated with one or more light sources. In some embodiments, the light source is a broadband light source, emitting light having a broad range of wavelengths, such as for example, spanning 50 nm or more, such as 100 nm or more, such as 150 nm or more, such as 200 nm or more, such as 250 nm or more, such as 300 nm or more, such as 350 nm or more, such as 400 nm or more and including spanning 500 nm or more. For example, one suitable broadband light source emits light having wavelengths from 200 nm to 1500 nm. Another example of a suitable broadband light source includes a light source that emits light having wavelengths from 400 nm to 1000 nm. Where methods include irradiating the flow stream with a broadband light source, broadband light source protocols of interest may include, but are not limited to, a halogen lamp, deuterium arc lamp, xenon arc lamp, stabilized fiber-coupled broadband light source, a broadband LED with continuous spectrum, superluminescent emitting diode, semiconductor light emitting diode, wide spectrum LED white light source, an multi-LED integrated white light source, among other broadband light sources or any combination thereof.

In other embodiments, irradiating the flow stream includes irradiating with a narrow band light source emitting a particular wavelength or a narrow range of wavelengths, such as for example with a light source which emits light in a narrow range of wavelengths like a range of 50 nm or less, such as 40 nm or less, such as 30 nm or less, such as 25 nm or less, such as 20 nm or less, such as 15 nm or less, such as 10 nm or less, such as 5 nm or less, such as 2 nm or less and including light sources which emit a specific wavelength of light (i.e., monochromatic light). Where methods include irradiating the flow stream with a narrow band light source, narrow band light source protocols of interest may include, but are not limited to, a narrow wavelength LED, laser diode or a broadband light source coupled to one or more optical bandpass filters, diffraction gratings, monochromators or any combination thereof.

In certain embodiments, methods include irradiating the flow stream with one or more lasers. As discussed above, the type and number of lasers will vary depending on the sample as well as desired emitted light collected and may be a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCI) excimer laser or xenon-fluorine (XeF) excimer laser or a combination thereof. In others instances, the methods include irradiating the flow stream with a dye laser, such as a stilbene, coumarin or rhodamine laser. In yet other instances, methods include irradiating the flow stream with a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, methods include irradiating the flow stream with a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

The sample in the flow stream may be irradiated with one or more of the above mentioned light sources, such as two or more light sources, such as three or more light sources, such as four or more light sources, such as five or more light sources and including ten or more light sources. The light source may include any combination of types of light sources. For example, in some embodiments, the methods include irradiating the sample in the flow stream with an array of lasers, such as an array having one or more gas lasers, one or more dye lasers and one or more solid-state lasers.

The flow stream may be irradiated with wavelengths ranging from 200 nm to 1500 nm, such as from 250 nm to 1250 nm, such as from 300 nm to 1000 nm, such as from 350 nm to 900 nm and including from 400 nm to 800 nm. For example, where the light source is a broadband light source, the flow stream may be irradiated with wavelengths from 200 nm to 900 nm. In other instances, where the light source includes a plurality of narrow band light sources, the flow stream may be irradiated with specific wavelengths in the range from 200 nm to 900 nm. For example, the light source may be plurality of narrow band LEDs (1 nm - 25 nm) each independently emitting light having a range of wavelengths between 200 nm to 900 nm. In other embodiments, the narrow band light source includes one or more lasers (such as a laser array) and the flow stream is irradiated with specific wavelengths ranging from 200 nm to 700 nm, such as with a laser array having gas lasers, excimer lasers, dye lasers, metal vapor lasers and solid-state laser as described above.

Where more than one light source is employed, the flow stream may be irradiated with the light sources simultaneously or sequentially, or a combination thereof. For example, the flow stream may be simultaneously irradiated with both light sources. In other embodiments, the flow stream is sequentially irradiated with both light sources. Where two light sources irradiate sequentially, the time each light source irradiates the sample in the flow stream may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the flow stream with the light source (e.g. laser) for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. In embodiments where the flow stream is sequentially irradiated with two or more light sources, the duration the flow stream is irradiated by each light source may be the same or different.

The time period between irradiation of the flow stream at the interrogation field by each light source may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation of the flow stream at the interrogation field by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In certain embodiments, the time period between irradiation of the flow stream at the interrogation field by each light source is 10 microseconds. In embodiments where the subject systems are configured to sequentially irradiate the flow stream by more than two (i.e., three or more) light sources, the delay between irradiation by each light source may be the same or different.

The flow stream may be irradiated continuously or in discrete intervals. In some instances, methods include irradiating the sample in the flow stream with the light source continuously. In other instances, the sample in the flow stream is irradiated with the light source in discrete intervals, such as irradiating the flow stream in the interrogation field every 0.001 millisecond, every 0.01 millisecond, every 0.1 millisecond, every 1 millisecond, every 10 milliseconds, every 100 milliseconds and including every 1000 milliseconds, or some other interval.

Depending on the light source and characteristics of the flow stream (e.g., flow stream width), the flow stream may be irradiated from a distance which varies such as 0.01 mm or more from the flow stream, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more from the flow stream. Also, the angle at which the flow stream is irradiate may also vary, ranging from 10° to 90°, such as from 15° to 85°, such as from 20° to 80°, such as from 25° to 75° and including from 30° to 60°. In certain embodiments, the flow stream is irradiated by the light source at a 90° angle with respect to the axis of the flow stream.

In certain embodiments, irradiating the flow stream includes moving one or more light sources (e.g., lasers) alongside the path of the flow stream. For instance, the light source may be moved upstream or downstream alongside the flow stream irradiating the flow stream along a predetermined length of the flow stream. For example, methods may include moving the light source along the flow stream for 0.01 mm or more from the flow stream, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more from the flow stream. The light source may be moved continuously or in discrete intervals. In some embodiments, the light source is moved continuously. In other embodiments, the light source is moved along the flow stream path in discrete intervals, such as for example in 0.1 mm or greater increments, such as 0.25 mm or greater increments and including 1 mm or greater increments.

As discussed above, in embodiments of the present disclosure methods include measuring light emitted by a sample in a flow stream which is propagated upstream by total internal reflectance by the medium of the flow stream. Methods include, in certain instances, irradiating the flow stream with a light source in an interrogation field downstream from the flow nozzle orifice and measuring light which is propagated upstream back into flow cell nozzle chamber through the nozzle orifice by total internal reflectance.

In embodiments, methods include measuring emitted light propagated upstream from the sample in the flow stream into flow cell nozzle chamber through the nozzle orifice. In practicing methods according to aspects of the present disclosure, the emitted light propagated through the orifice of the flow cell nozzle is measured at one or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring the light transmitted through the sample chamber at 400 or more different wavelengths.

In some embodiments, methods include measuring light emitted by a sample in the flow stream over a range of wavelengths (e.g., 200 nm - 1000 nm). In certain embodiments, measuring the emitted light propagated upstream through the nozzle orifice by total internal reflectance includes collecting spectra of light over a range of wavelengths. For example, methods may include collecting spectra of light over one or more of the wavelength ranges of 200 nm - 1000 nm. In yet other embodiments, methods include measuring emitted light propagated upstream through the nozzle orifice includes at one or more specific wavelengths. For example, emitted light may be measured at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, methods including measuring wavelengths of light which correspond to the fluorescence peak wavelength of certain fluorophores.

The emitted light may be measured continuously or in discrete intervals. In some instances, methods include taking measurements of the light emitted by a sample in the flow stream continuously. In other instances, the emitted light is measured in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

Measurements of the emitted light may be taken one or more times during the subject methods, such 2 or more times, such as 3 or more times, such as 5 or more times and including 10 or more times. In certain embodiments, the emitted light propagated upstream through the nozzle orifice by total internal reflectance is measured two or more times, with the data in certain instances being averaged.

Emitted light propagated upstream through the nozzle orifice by total internal reflectance may be measured by any convenient light detecting protocol, including but not limited to optical sensors or photodetectors, such as active-pixel sensors (APSs), avalanche photodiode, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes, phototransistors, quantum dot photoconductors or photodiodes and combinations thereof, among other photodetectors. In certain embodiments, the transmitted light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, light is measured with a charge-coupled device (CCD). Where the transmitted light is measured with a CCD, the active detecting surface area of the CCD may vary, such as from 0.01 cm² to 10 cm², such as from 0.05 cm² to 9 cm², such as from, such as from 0.1 cm² to 8 cm², such as from 0.5 cm² to 7 cm² and including from 1 cm² to 5 cm².

In some embodiments, methods include optically adjusting the emitted light propagated through the flow cell nozzle orifice. For example, the emitted light may be passed through one or more lenses, mirrors, pinholes, slits, gratings, light refractors, and any combinations thereof. In some instances, the emitted light is passed through one or more focusing lenses, such as to reduce the profile of the light propagated through the flow cell nozzle orifice onto the active surface of the detector. In other instances, the emitted light is passed through one or more de-magnifying lenses, such as to increase the profile of the light propagated through the flow cell nozzle orifice onto the active surface of the detector.

In yet other instances, methods include collimating the light. For example, light propagated upstream through the nozzle orifice from the flow stream may be collimated by passing the light through one or more collimating lenses or collimating mirrors or a combination thereof.

In certain embodiments, methods include passing the light collected from the nozzle orifice through fiber optics. As discussed above, suitable fiber optics protocols for propagated light from the flow cell nozzle chamber to the active surface of the detector include, but is not limited to, flow cytometer fiber optics protocols such as those described in United States Patent No. 6,809,804.

In certain embodiments, methods including passing the emitted light which is propagated through the nozzle orifice by total internal reflection through one or more wavelength separators. Wavelength separation, according to certain embodiments, may include selectively passing or blocking specific wavelengths or wavelength ranges of the polychromatic light. To separate wavelengths of light, the light may be passed through any convenient wavelength separating protocol, including but not limited to colored glass, bandpass filters, interference filters, dichroic mirrors, diffraction gratings, monochromators and combinations thereof, among other wavelength separating protocols.

In some embodiments, methods include separating the light by passing the light through one or more diffraction gratings. Diffraction gratings of interest may include, but are not limited to transmission, dispersive or reflective diffraction gratings. Suitable spacings of the diffraction grating may vary depending on the configuration of the light source, slit projection module, sample chamber, objective lens, ranging from 0.01 µm to 10 µm,such as from 0.025 µm to 7.5 µm, such as from 0.5 µm to 5 µm, such as from 0.75 µm to 4 µm, such as from 1 µm to 3.5 µm and including from 1.5 µm to 3.5 µm.

In other embodiments, methods include separating the wavelengths of light by passing the emitted light which is propagated through the nozzle orifice by total internal reflection through one or more optical filters, such as one or more bandpass filters. For example, optical filters of interest may include bandpass filters having minimum bandwidths ranging from 2 nm to 100 nm, such as from 3 nm to 95 nm, such as from 5 nm to 95 nm, such as from 10 nm to 90 nm, such as from 12 nm to 85 nm, such as from 15 nm to 80 nm and including bandpass filters having minimum bandwidths ranging from 20 nm to 50 nm.

### COMPUTER-CONTROLLED SYSTEMS

Aspects of the present disclosure further include computer controlled systems for practicing the subject methods, where the systems further include one or more computers for complete automation or partial automation of a system for practicing methods described herein. In some embodiments, systems include a computer having a computer readable storage medium with a computer program stored thereon, where the computer program when loaded on the computer includes instructions for irradiating a sample in a flow stream in an interrogation field; algorithm for detecting emitted light propagated upstream through the flow cell nozzle orifice by total internal reflectance and measuring the detected light at one or more wavelengths.

In embodiments, the system includes an input module, a processing module and an output module. In some embodiments, the subject systems may include an input module such that parameters or information about each fluidic sample, intensity and wavelengths (discrete or ranges) of the applied light source, properties of the flow cell nozzle including nozzle chamber size, the angles made by the nozzle chamber walls with respect to the axis of the flow stream, nozzle orifice size and wall thickness at the nozzle orifice, duration of irradiation by the light source, number of different light sources, distance from light source to the flow stream, focal length of any optical adjustment components, refractive index of flow stream medium (e.g., sheath fluid), presence of any wavelength separators, properties of wavelength separators including bandpass width, opacity, grating spacting as well as properties and sensitivity of photodetectors.

The processing module includes memory having a plurality of instructions for performing the steps of the subject methods, such as irradiating a sample in a flow stream in an interrogation field; detecting light emitted by the sample in the flow stream propagated upstream through the flow cell nozzle orifice by total internal reflectance and measuring the detected light at one or more wavelengths.

After the processing module has performed one or more of the steps of the subject methods, an output module communicates the results to the user, such as by displaying on a monitor or by printing a report.

The subject systems may include both hardware and software components, where the hardware components may take the form of one or more platforms, e.g., in the form of servers, such that the functional elements, i.e., those elements of the system that carry out specific tasks (such as managing input and output of information, processing information, etc.) of the system may be carried out by the execution of software applications on and across the one or more computer platforms represented of the system.

Systems may include a display and operator input device. Operator input devices may, for example, be a keyboard, mouse, or the like. The processing module includes a processor which has access to a memory having instructions stored thereon for performing the steps of the subject methods, such as irradiating a sample in a flow stream in an interrogation field; detecting light emitted by the sample in the flow stream propagated upstream through the flow cell nozzle orifice by total internal reflectance and measuring the detected light at one or more wavelengths.

The processing module may include an operating system, a graphical user interface (GUI) controller, a system memory, memory storage devices, and input-output controllers, cache memory, a data backup unit, and many other devices. The processor may be a commercially available processor or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, a removable hard disk drive, or a diskette drive. Such types of memory storage devices typically read from, and/or write to, a program storage medium (not shown) such as, respectively, a compact disk, magnetic tape, removable hard disk, or floppy diskette. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described comprising a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid state storage devices (including magnetic or optical disks or tape or RAM, or any other suitable device, either fixed or portable). The processor may include a general purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the invention also include programming, e.g., in the form of computer program products, algorithms for use in practicing the methods as described above. Programming according to the present invention can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, WiFi, infrared, wireless Universal Serial Bus (USB), Ultra Wide Band (UWB), Bluetooth^{®} communication protocols, and cellular communication, such as code division multiple access (CDMA) or Global System for Mobile communications (GSM).

In one embodiment, the communication interface is configured to include one or more communication ports, e.g., physical ports or interfaces such as a USB port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction therewith, in managing the treatment of a health condition, such as HIV, AIDS or anemia.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or WiFi connection to the internet at a WiFi hotspot.

In one embodiment, the subject systems are configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. In some embodiments, the server device has a display, such as a liquid crystal display (LCD), as well as an input device, such as buttons, a keyboard, mouse or touch-screen.

In some embodiments, the communication interface is configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a work station, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows NT^{®}, Windows XP, Windows 7, Windows 8, iOS, Sun Solaris, Linux, OS/400, Compaq Tru64 Unix, SGI IRIX, Siemens Reliant Unix, and others.

### KITS

Aspects of the invention further include kits, where kits include one or more flow cell nozzles as described herein. In some instances, the kits can include one or more assay components (e.g., labeled reagents, buffers, etc., such as described above). In some instances, the kits may further include a sample collection device, e.g., a lance or needle configured to prick skin to obtain a whole blood sample, a pipette, etc., as desired.

The various assay components of the kits may be present in separate containers, or some or all of them may be pre-combined. For example, in some instances, one or more components of the kit, e.g., the flow cell nozzles, are present in a sealed pouch, e.g., a sterile foil pouch or envelope.

In addition to the above components, the subject kits may further include (in certain embodiments) instructions for practicing the subject methods. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

### UTILITY

The subject flow cell nozzles, systems, methods and computer systems find use in a variety of application where it is desirable to increase the amount of emitted light measured by a sample in a fluid medium. In some embodiments, the present disclosure finds use in enhancing measurements of light emitted by a sample in flow stream of a flow cytometer. Embodiments of the present disclosure find use where enhancing the effectiveness of emission measurements in flow cytometry are desired, such as in research and high throughput laboratory testing. The present disclosure also finds use where it is desirable to provide a flow cytometer with improved cell sorting accuracy, enhanced particle collection, reduced energy consumption, particle charging efficiency, more accurate particle charging and enhanced particle deflection during cell sorting. In embodiments, the present disclosure reduces the need for increasing the number of detectors positioned adjacent to a flow cell for collecting diffuse emitted light.

The present disclosure also finds use in applications where cells prepared from a biological sample may be desired for research, laboratory testing or for use in therapy. In some embodiments, the subject methods and devices may facilitate the obtaining individual cells prepared from a target fluidic or tissue biological sample. For example, the subject methods and systems facilitate obtaining cells from fluidic or tissue samples to be used as a research or diagnostic specimen for diseases such as cancer. Likewise, the subject methods and systems facilitate obtaining cells from fluidic or tissue samples to be used in therapy. Methods and devices of the present disclosure allow for separating and collecting cells from a biological sample (e.g., organ, tissue, tissue fragment, fluid) with enhanced efficiency and low cost as compared to traditional flow cytometry systems.

Although the foregoing invention has been described in some detail by way of illustration and example for purposes of clarity of understanding, it is readily apparent to those of ordinary skill in the art in light of the teachings of this disclosure that certain changes and modifications may be made thereto without departing from the scope of the appended claims.

## Claims

1. A flow cell nozzle (200a, 200b) configured to propagate a flow stream comprising a sample wherein the flow cell nozzle (200a, 200b) comprises:
a nozzle chamber having a proximal end and a distal end (220a, 220b); and
a nozzle orifice (221a, 221b) positioned at the distal end (220a, 221b) of the nozzle chamber,
wherein the nozzle chamber comprises walls comprising a reflective coating that are angled from 120º to 160º relative to the longitudinal axis of the flow stream, when the flow stream is emanating from the nozzle orifice (221a, 221b), and reflect light emitted by the sample that is propagated upstream by total internal reflectance through the flow to the proximal end (210a, 210b) of the nozzle chamber, when the flow stream is emanating from the nozzle orifice (221a,221b).

2. The flow cell nozzle according to claim 1, wherein the nozzle chamber comprises a proximal cylindrical portion (210a).

3. The flow cell nozzle according to claims 1 or 2, wherein the width of the walls of the flow cell at the nozzle orifice is a quarter of the width of the flow stream or less.

4. The flow cell nozzle according to any of the preceding claims, wherein the nozzle chamber further comprises an optical adjustment component.

5. A system for detecting light propagated in a flow stream by total internal reflectance, the system comprising:
a light source configured to irradiate a sample in the flow stream in an interrogation field;
a flow cell nozzle according to any of the preceding claims, and a detector for measuring one or more wavelengths of light propagated by the sample at the proximal end of the nozzle chamber.

6. The system according to claim 5, wherein the light source is a laser.

7. The system according to any of the claims 5 or 6, wherein the flow cell nozzle is positioned orthogonal to the light source.

8. A method for detecting light propagated in a flow stream by total internal reflectance, the method comprising:
irradiating a sample in the flow stream in an interrogation field with a light source;
propagating the flow stream with a flow cell nozzle according to any of the claims 1-4,
detecting light emitted by the sample in the flow stream propagated upstream through the flow stream by total internal reflectance at a proximal end of the nozzle chamber, and
measuring the detected light at one or more wavelengths.

9. The method according to claim 8, wherein the flow stream is irradiated in an interrogation field that is orthogonal to and positioned 1 mm or greater downstream from the flow cell nozzle orifice.

10. The method according to claim 8 or 9, wherein the sample emits fluorescence heterogeneously.

11. The method according to any of the claims 8 to 10, wherein the sample is a gamete.

## Patentansprüche

1. Durchflusszellendüse (200a, 200b), die so konfiguriert ist, dass sie einen eine Probe umfassenden Durchflussstrom ausbreitet, wobei die Durchflusszellendüse (200a, 200b) Folgendes umfasst:
eine Düsenkammer mit einem proximalen Ende und einem distalen Ende (220a, 220b); und
eine Düsenöffnung (221a, 221b), die an dem distalen Ende (220a, 220b) der Düsenkammer positioniert ist,
wobei die Düsenkammer Wände umfasst, die eine reflektierende Beschichtung umfassen und die von 120° bis 160° relativ zur Längsachse des Durchflussstroms abgewinkelt sind, wenn der Durchflussstrom aus der Düsenöffnung (221a, 221b) austritt, und die das von der Probe emittierte Licht reflektieren, das stromaufwärts durch interne Totalreflexion durch den Durchflussstrom zu dem proximalen Ende (210a, 210b) der Düsenkammer ausgebreitet wird, wenn der Durchflussstrom aus der Düsenöffnung (221a, 221b) austritt.

2. Durchflusszellendüse nach Anspruch 1, wobei die Düsenkammer einen proximalen zylindrischen Abschnitt (210a) umfasst.

3. Durchflusszellendüse nach Anspruch 1 oder 2, wobei die Breite der Wände der Durchflusszelle an der Düsenöffnung ein Viertel der Breite des Durchflussstroms oder weniger beträgt.

4. Durchflusszellendüse nach einem der vorhergehenden Ansprüche, wobei die Düsenkammer ferner eine optische Anpassungskomponente umfasst.

5. System zum Erfassen von sich in einem Durchflussstrom ausbreitendem Licht durch interne Totalreflexion, wobei das System Folgendes umfasst:
eine Lichtquelle, die konfiguriert ist, um eine in dem Durchflussstrom enthaltene Probe in einem Abfragefeld zu bestrahlen;
eine Durchflusszellendüse nach einem der vorhergehenden Ansprüche und einen Detektor zum Messen einer oder mehrerer Wellenlängen von Licht, das sich von der Probe an dem proximalen Ende der Düsenkammer ausbreitet.

6. System nach Anspruch 5, wobei es sich bei der Lichtquelle um einen Laser handelt.

7. System nach einem der Ansprüche 5 oder 6, wobei die Durchflusszellendüse orthogonal zu der Lichtquelle positioniert ist.

8. Verfahren zum Erfassen von sich in einem Durchflussstrom ausbreitendem Licht durch interne Totalreflexion, wobei das Verfahren Folgendes umfasst:
Bestrahlen einer in einem Durchflussstrom enthaltenen Probe in einem Abfragefeld mit einer Lichtquelle,
Ausbreiten des Durchflussstroms mit einer Durchflusszellendüse nach einem der Ansprüche 1 bis 4,
Erfassen von Licht, das von der in dem Durchflussstrom enthaltenen Probe emittiert wird, und das sich stromaufwärts durch den Durchflussstrom ausbreitet, durch interne Totalreflexion an einem proximalen Ende der Düsenkammer, und
Messen des erfassten Lichts bei einer oder mehreren Wellenlängen.

9. Verfahren nach Anspruch 8, wobei der Durchflussstrom in einem Abfragefeld bestrahlt wird, das orthogonal zu der Durchflusszellen-Düsenöffnung und 1 mm oder mehr stromabwärts dazu positioniert ist.

10. Verfahren nach Anspruch 8 oder 9, wobei die Probe heterogen Fluoreszenz emittiert.

11. Verfahren nach einem der Ansprüche 8 bis 10, wobei es sich bei der Probe um eine Keimzelle handelt.

## Revendications

1. Buse de cellule à circulation (200a, 200b) conçue pour propager un écoulement comprenant un échantillon, ladite buse de cellule à circulation (200a, 200b) comprenant :
une chambre de buse présentant une extrémité proximale et une extrémité distale (220a, 220b), et
un orifice de buse (221a, 221b) disposé à l'extrémité distale (220a, 220b) de la chambre de buse ;
ladite chambre de buse comprenant des parois, comprenant un revêtement réfléchissant, qui sont inclinées de 120° à 160° par rapport à l'axe longitudinal de l'écoulement, lorsque l'écoulement sort par l'orifice de buse (221a, 221b), et qui réfléchissent la lumière émise par l'échantillon et propagée en amont par une réflexion totale interne à travers l'écoulement jusqu'à l'extrémité proximale (210a, 210b) de la chambre de buse, lorsque l'écoulement sort par l'orifice de buse (221a, 221b).

2. Buse de cellule à circulation selon la revendication 1, dans laquelle la chambre de buse comprend une partie cylindrique proximale (210a).

3. Buse de cellule à circulation selon la revendication 1 ou 2, dans laquelle la largeur des parois de la cellule à circulation au niveau de l'orifice de buse fait un quart de la largeur de l'écoulement ou moins.

4. Buse de cellule à circulation selon l'une quelconque des revendications précédentes, dans laquelle la chambre de buse comprend en outre un composant de réglage optique.

5. Système de détection de lumière propagée dans un écoulement par une réflexion totale interne, le système comprenant :
une source de lumière conçue pour irradier un échantillon présent dans l'écoulement dans un champ d'interrogation ;
une buse de cellule à circulation selon l'une quelconque des revendications précédentes, et un détecteur destiné à mesurer une ou plusieurs longueurs d'onde de la lumière propagée par l'échantillon au niveau de l'extrémité proximale de la chambre de buse.

6. Système selon la revendication 5, dans lequel la source de lumière est un laser.

7. Système selon l'une quelconque des revendications 5 et 6, dans lequel la buse de cellule à circulation est disposée orthogonalement à la source de lumière.

8. Procédé de détection de la lumière propagée dans un écoulement par une réflexion totale interne, le procédé comprenant :
l'irradiation d'un échantillon présent dans un écoulement dans un champ d'interrogation par une source de lumière,
la propagation de l'écoulement à l'aide d'une buse de cellule à circulation selon l'une quelconque des revendications 1 à 4,
la détection de la lumière émise par l'échantillon présent dans l'écoulement et propagée en amont à travers l'écoulement par une réflexion totale interne au niveau d'une extrémité proximale de la chambre de buse, et
la mesure de la lumière détectée à une ou plusieurs longueurs d'onde.

9. Procédé selon la revendication 8, dans lequel l'écoulement est irradié dans un champ d'interrogation qui est orthogonal à l'orifice de la buse de cellule à circulation et est disposé à 1 mm ou plus en aval dudit orifice.

10. Procédé selon la revendication 8 ou 9, dans lequel l'échantillon émet de la fluorescence de façon hétérogène.

11. Procédé selon l'une quelconque des revendications 8 à 10, dans lequel l'échantillon est un gamète.
